Europäisches Patentamt

(19) European Patent Office

Office européen des brevets

(11) Publication number: **0 074 512**
**A1**

# (12) EUROPEAN PATENT APPLICATION

(21) Application number: **82107632.0**

(22) Date of filing: **20.08.82**

(51) Int. Cl.³: **B 07 C 5/34**
**G 01 B 11/02**
**//B65D41/00**

(30) Priority: **07.09.81 IT 351981**

(43) Date of publication of application:
**23.03.83 Bulletin 83/12**

(84) Designated Contracting States:
**BE DE FR GB**

(71) Applicant: **S.A.C.M.I. Cooperativa Meccanici Imola**
**Socièta Cooperativa a Responsabilita Limitata**
**Via Provinciale Selice, 17/A**
**I-40026 Imola (Bologna)(IT)**

(72) Inventor: **Alieri, Rodiero**
**Via Liverani, 7**
**I-40026 Imola (Province of Bologna)(IT)**

(74) Representative: **Modiano, Guido et al,**
**MODIANO & ASSOCIATI S.A.S. Via Meravigli, 16**
**I-20123 Milan(IT)**

(54) **Apparatus for checking faults in objects, in particular closure caps.**

(57) The apparatus comprises a light source (13) adapted to illuminate the object (1) with a light pulse, an optical sensor (14) for spot scanning the illuminated object (1) and supplying at the output thereof, for each scanned spot, a signal related to the brilliance level of the object reflected signal, a counter stage (17) for storing the number of the scanned spots having different brilliance levels and providing a respective brilliance histogram, and a comparator (21) for supplying a quality indicating signal from the comparison of the histogram with preset reference values.

Fig. 1

EP 0 074 512 A1

This invention relates to an apparatus for checking objects, in particular closure caps, for faults.

In order to ascertain the integrity of objects, the method most widely adopted is that of visual inspection, which relies on the skill of specially appointed personnel. This checking procedure is of doubtful reliability, and altogether unsuitable for modern requirements, owing to the high costs brought about by the use of such personnel.

Various photo-optical operation apparatus have also been proposed. Particularly for checking the absence of faults in closure caps, an apparatus is known which comprises a TV camera which images the object and generates a video signal to detector means connected to means arranged to generate an alarm or warning signal when the detector means output signal, resulting from the detection of a fault in the object, differs from the reference one. This prior apparatus, by spot scanning the object image, is not adequately reliable and cannot afford an adequate discriminating capability, such as is required in current cap manufacturing plants, while it provides no clue as to the overall quality of the object being inspected. This mainly because some types of imperfections do not require that the affected object be necessarily rejected.

Accordingly the task of this invention is to provide an apparatus which can operate at a high rate and concurrently provide accurate indications of the quality and magnitude of any detected faults on the basis of an overall imaging of an object.

Within this task it is an object of the invention to provide an apparatus which is reliable in operation and is construction-wise simple for the results it affords, so as to be of an economical cost.

According to one aspect of the present invention the above task and object as well as yet other objects which will become more apparent hereinafter are achieved by an apparatus for checking objects, in particular closure caps, for faults, characterized in that it comprises a light source adapted to illuminate said object with a light pulse, an optical sensor for spot scanning the illuminated object and supplying at the output thereof, for each scanned spot, a signal proportional to the brilliance level of the signal reflected by said object, a counter stage comprising a plurality of counters, each thereof is adapted to store the number of scanned spots having different brilliance levels and provide a respective brilliance histogram, and comparator means adapted to supply a quality indicating signal from the comparison of said histograms with preset reference values.

Further features and advantages of the invention will become more apparent from the following detailed description of an embodiment thereof, with reference to the accompanying drawing, where:

Figure 1 shows a block diagram of an apparatus for seeking faults in caps;

Figure 2 is a diametrical section view through a cap;

Figure 3 is a plan view of said cap; and

Figure 4 diagramatically illustrates two assumed distributions of brilliance over a preset zone of the cap.

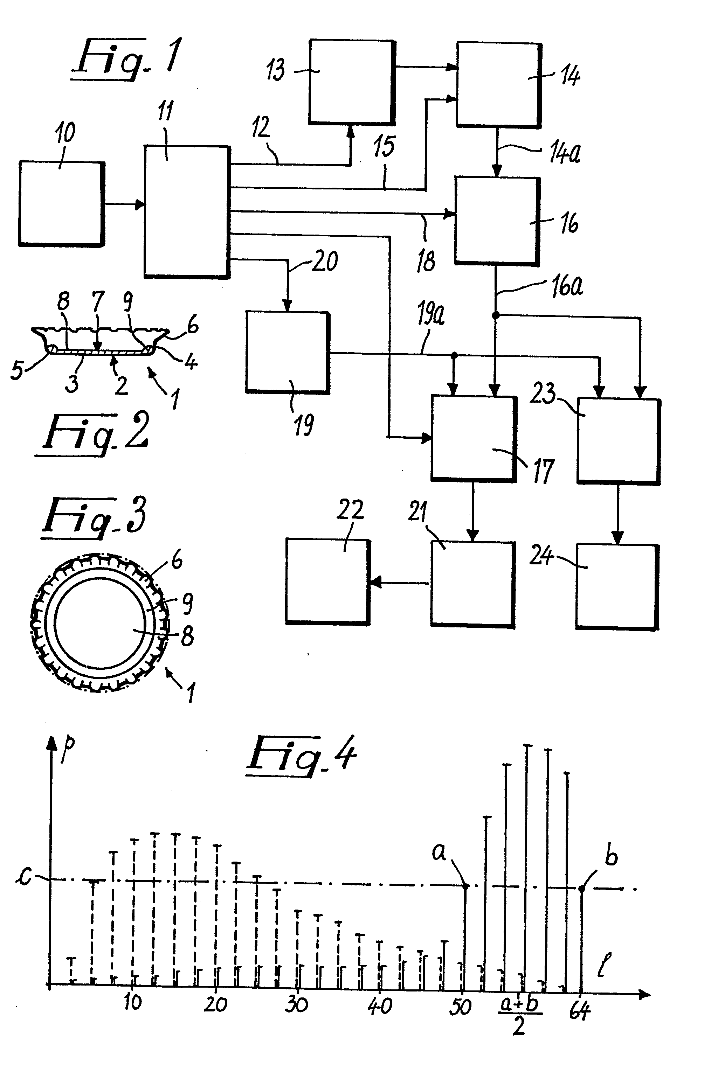

Making reference to Figure 2, there is generally indicated at 1 a closure cap comprising a metal cup 2 with a substantially flat bottom 3, and a cylindrical wall 4 defining with said bottom a rounded corner 5 and wherefrom a crown 6 formed with serrations projects outwardly. The bottom 3 is coated with a gasket 7 comprising a central layer 8 of a plastic material, which surrounded peripherally by an annular embossment 9 at the corner 5.

The faults most frequently encountered in such caps are mainly the presence of impurities or imperfections in the gasket, and incomplete formation of the cup serrated crown.

As for the detection of faults in the gasket, the apparatus according to this invention broadly operates to illuminate the gasket and process the reflected image. However, since a gasket, owing to the presence of differently configured areas, cannot provide a uniform optical image, it is contemplated that the apparatus carries out a check on each area or zone having uniform characteristics.

The cap of Figures 2 and 3 is, therefore, to be regarded as subdivided into a central circular zone, coinciding with the bottom covering layer 8, and an annular zone corresponding to the annular embossment 9. Such zones will be indicated, hereinafter, with the same reference numerals, 8 and 9.

As is known, closure caps are manufactured on plants where, for transporting them through the various forming stations, rotary stars are provided which have peripheral seats which accommodate the caps in narrow tolerance relationship. With each housing, and accordingly with each cap, there is associated an element capable of being detected by a device which initiates the cap inspection step.. In the inventive apparatus, the device may comprise, for example, a coupling 10 composed of a light source and photoelectric cell. Other devices, such as induction ones, may also be used.

The apparatus of this invention comprises a synchronizer 11 (known in the technical parlance as "strobe"), to which the signal from the device 10 is supplied.

The synchronizer 11 controls, through an output 12, a flash-light 13 which illuminates the object with a light pulse. The image of the illuminated cap, through a suitable optics, is detected by an optical sensor 14 effective to spot reproduce the reflected image. A suitable optical sensor is, for example, a component manufactured by Reticon in the USA and known under the trade name of SOLID-STATE IMAGE SENSOR ARRAY RA 100 x 100.

Said component comprises ten thousand light sensitive diodes, or photodiodes, scattered over a 6x6 mm area and capable of supplying as many analog signals of the brilliance detected by each of them.

Upon control by the synchronizer 11, through an output 15 thereof, the analog signals at the output 14a of the optical sensor are transferred into an analog-to-digital converter 16 which discriminates them in conformity with a preset number of brilliance levels, e.g. 64.

The output 16a in the converter 16 is connected to a stage 17 which, for each zone of subdivision of the cap, counts the signals digitalized at the various levels. The counting is controlled by the output 18 of the synchronizer and the zone address is supplied to the stage 17 from a memory 19 through the output 19a. In the memory 19, there is stored a so-called mask of the cap containing that portion of the address which relates to the zone of the cap being inspected. The memory 19 is also controlled by the synchronizer 11 through the output 20.

In the counter stage 17, each digitalized signal increases by one unit the level counter which, for a given zone addressed by the memory, corresponds to said signal. It should be noted that the addressing of the signals to the respective level counters is selected by suitable logic circuitry.In practice, the stage 17 contains as many counters as are the brilliance levels multiplied by all the subdivision zones of the cap (in the example, therefore, 64x2 = 128 counters).

The count of the signals for one of the zones 8 or 9 is better illustrated by the diagram of Figure 4, where the abscissae show the brilliance "$\ell$" levels from 1 to 64, and the ordinates show the number "p" of the brilliant spots detected by the optical sensor 14 and having said brilliance "$\ell$".

For a cap where the zone 8 or 9 is in an acceptable condition, the maximum of the number "p" of spots will occur at those counters which count the number of spots having maximum brilliance values. Thus, a histogram of brilliance for the given zone will be obtained, with a peak shifted to the right, as shown in full lines in Figure 4. On the contrary, as the quality of the zone deteriorates, the peak moves to the left, as shown in dash lines in Figure 4.

The evaluation of the histogram quality may be effected in several ways. According to the inventive concept, one of these ways provides for the computation of the ratio "q" of the distribution width of brilliance to the average value of said distribution. That ratio constitutes a parameter indicative of quality; in fact, by indicating with "a" and "b" the limits of a distribution range for a predetermined number of increments "c" the ratio $q = 2(b-a)/(b+a)$ tends to zero the smaller is the distribution range and the higher is the average value, that is to say when the histogram shows good quality characteristics. By contrast, quality will deteriorate more the larger is the distribution range and the smaller the average value. It should be noted that the number of the increments gathered in the histograms for the various zones is practically constant, so that distribution over a/ wide range would automatically reflect in the histogram being flattened.

Comparison between the cited ratio and a reference value for the various cap zones is carried out in a microprocessor 21 to which the stage 17 supplies the information and which, according to the result of said comparison, activates or not a reject device 22.

It will also be possible to so set the microprocessor as to obtain sorting of the caps according to various quality classes.

This apparatus is susceptible to many modifications and variations without departing from the same solution concept. One of these variations provides for the use of a memory 23 to which are conducted the signals from the converter 16 and memory for the zones 19. The memory 23 allows a spot reconstruction of the cap on a video display 24.

The apparatus just described also allows inspection of the serrated crown 6 of the cap. As may be seen in Figure 3,. the crown 6 has an undulating contour. By sequentially inspecting those spots which are located along the circle intersecting said undulations and shown in dot-and-dash lines one obtains a variation which, being only discriminated at two levels, steps up one counter. The resulting total number includes, hence, twice the number of corrugations in the crown. If a corrugation is missing, the number of variations does not reach that provided and the cap is rejected.

The apparatus of this invention also enables the degrading effects caused by zones where brilliance
may have incostant, or at least doubtful, values
to be eliminated. This applies especially to the
zones extending along the junctions between the zones
8 and 9. In this case, in the storage of the cap mask
provision is made to cancel the spots belonging to
said doubtful zones.

Of course, the number of the subdivision zones
of a cap may vary at will, within the concept that
each zone may be accompanied by a different quality
parameter, according to requirements. Thus, for example,
for the zone 9 relating to the embossment, a high
qualitative parameter is required with respect to the
central zone 8, since the zone 9 has an important
sealing function.

## CLAIMS

1. An apparatus for checking objects, in particular closure caps, for faults, characterized in that it comprises a light source (13) adapted to illuminate said object (1) with a light pulse, an optical sensor (14) for spot scanning the illuminated object (1) and supplying at the output thereof, for each scanned spot, a signal proportional to the brilliance level of the signal reflected by said object, a counter stage (17) comprising a plurality of counters, each thereof is adapted to store the number of scanned spots having different brilliance levels and provide a respective brilliance histogram, and comparator means (21) adapted to supply a quality indicating signal from the comparison of said histograms with preset reference values.

2. An apparatus according to Claim 1, characterized in that it comprises a memory stage (19) storing a mask of said object (1) geometrically subdivided into a preset number of zones and adapted to supply said counter stage, for each brilliant spot, with a respective signal indicating the locating zone of said spot.

3. An apparatus according to one or more of the preceding claims, characterized in that it comprises an analog-to-digital converter (16) interposed between said optical sensor (14) and said counter stage (17), adapted to quantize the brilliant signal supplied by said optical sensor (14) into a discrete number of levels, and in that said counters are provided in a number equal to the number of quantization levels multiplied by the number of the subdivision zones of said object.

4. An apparatus according to Claim 1, characterized in that said optical sensor (14) comprises a solid state matrix component.

5. An apparatus according to Claim 1, characterized in that it comprises a video memory (23, 24) connected to said converter (16) and said memory stage (19) for constructing an image of the inspected cap.

6. An apparatus according to any of the preceding claims, characterized in that said comparator means (21) comprise a microprocessor effective to control means (22) for selecting said objects (1) depending on the detected quality thereof.

7. An apparatus according to any of the preceding claims, characterized in that said optical sensor (14) is effective to sequentially inspect the points lying on a circle intersecting the crown (6) edge undulations, in that said analog-to-digital converter (16) is effective to discriminate upon the variations of said points at two levels, and in that said counter stage (17) and comparator means are a effective to count said variations and compare them with a reference value.

8. An apparatus for checking objects, in particular closure caps, for faults, substantially as herein described and illustrated.

_Fig. 1_

_Fig. 2_

_Fig. 3_

_Fig. 4_

European Patent Office

**EUROPEAN SEARCH REPORT**

EP 82 10 7632

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 949 591 (KLUGE) *Figures 1-3,9-13,15-17,19-20* | 1,6 | B 07 C 5/34 G 01 B 11/02 // B 65 D 41/00 |
| A | DE-A-2 015 108 (FRIEDRICH KRUPP GmbH) *Pages 2-5* | 1,3 | |
| A | DE-A-2 015 123 (FRIEDRICH KRUPP GmbH) *Pages 2-4,8* | 1,3,4 | |
| A | MESSEN + PRÜFEN, vol. 13, no. 10, October 1977, pages 631-637, Bad WÖRISHOFEN (DE); W.SCHRAMBÖCK: "Berührungslos messen mit halbleitersensoren". | 1,3,4 | |
| A | US-A-3 899 081 (SHOTBOLT) | 8 | TECHNICAL FIELDS SEARCHED (Int. Cl. 3)<br><br>B 07 C<br>G 01 B<br>G 06 F |

The present search report has been drawn up for all claims

| Place of search THE HAGUE | Date of completion of the search 29-12-1982 | Examiner PESCHEL W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82